# EUROPEAN PATENT APPLICATION

(11) **EP 2 099 117 A2**
(43) Date of publication of application: **09.09.2009**
(21) Application number: 09001957.1
(22) Date of filing: 12.02.2009
(51) Int. Cl.: H02M 7/00

(54) **Electric power converter**

(30) Priority: 07.03.2008 JP 2008057155
(71) Applicant: Hitachi Ltd., Chiyoda-ku Tokyo (JP)
(72) Inventor: Ayano, Hideki, Tokyo 100-8220 (JP); Inaba, Hiromi, Tokyo 100-8220 (JP); Ohnuma, Naoto, Tokyo 100-8220 (JP); Mori, Kazuhisa, Tokyo 100-8220 (JP); Hiruta, Kiyoharu, Tokyo 100-8220 (JP); Sakoda, Tomoharu, Tokyo 100-8220 (JP); Mita, Fumiaki, Tokyo 100-8220 (JP); Hotate, Hisashi, Tokyo 100-8220 (JP)
(74) Representative: Kirschner, Klaus Dieter

(57) **Abstract**

In an electric power converter, semiconductor switching elements (1a ∼ 1c, 2a ∼ 2c) and capacitors (4a ∼ 4h) are so arranged that the direction of the alignment of the positive and negative terminals of the semiconductor switching elements (1a ∼ 1c, 2a ∼ 2c) is nearly the same as the direction of the alignment of the positive and negative terminals of those (4e ∼ 4h, 4a ∼ 4d) of the capacitors which are located in the vicinity of the semiconductor switching elements (1a ∼ 1c, 2a ∼ 2c), and that the order of the positive and negative terminals appearing in the alignment of the semiconductor switching elements (1a ∼ 1c, 2a ∼ 2c) are opposite to the order of the positive and negative terminals appearing in the alignment of those (4e ∼ 4h, 4a ∼ 4d) of the capacitors which are located in the vicinity of the semiconductor switching elements (1a ∼ 1c, 2a ∼ 2c).

## Description

This invention relates to an electric power converter, and more particularly to the layout of capacitors constituting a smoothing capacitor system, mounted on the printed wiring board (PWB) in an electric power converter.

According to the conventional layout of smoothing capacitors disposed in the DC link section between the rectifier and the inverter in an electric power converter, capacitors are disposed between the semiconductor switching devices constituting a pulse width modulation (PWM) rectifier and the semiconductor switching devices constituting an inverter, or beside the semiconductor switching devices, and connected with one another via lead wires or bus bars. With such a conventional layout of smoothing capacitors, there was a risk that excessively high voltages are developed across the terminals of the semiconductor switching devices due to the wiring inductance of the lead wires or bus bars when the semiconductor switching devices are turned on, thereby damaging the semiconductor switching devices. In order to prevent such excessively high voltages from being developed and therefore damaging the semiconductor switching devices, a snubber circuit for suppressing excessively high voltages has been usually used hitherto. On the other hand, JP-A-2003-219661 and JP-A-2006-197735 disclose a technique wherein wiring inductance is reduced by disposing small-sized capacitors on a conducting substrate such as a PWB so that the snubber circuit can be eliminated or reduced in size.

According to the technique wherein plural small-sized capacitors are disposed on a PWB, the electrostatic capacitance conventionally developed by a large-sized capacitor can be replaced by the electrostatic capacitance developed by plural small-sized capacitors connected in parallel with one another. However, this conventional technique has not taken into consideration the unevenness in the currents distributed among the respective capacitors.

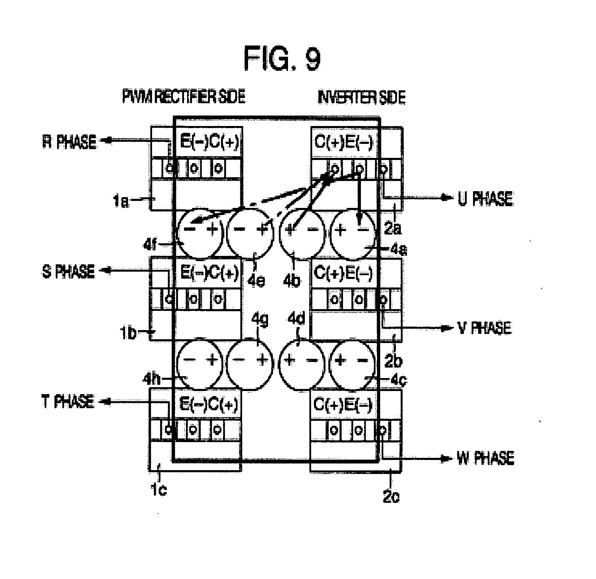

Fig. 9 shows an example of the conventional layout of the plural small-sized capacitors disposed on a PWB. The main circuit of an electric power converter (hereafter referred to simply as power converter) comprises semiconductor switching devices 1a ∼ 1c on the side of a PWM rectifier, semiconductor switching devices 2a ∼ 2c on the side of an inverter, a PWB 3, and capacitors 4a ∼ 4h. Regarding the capacitors disposed on the PWB, two capacitors are connected in series with each other to gain enough withstand voltage whereas four capacitors are connected in parallel with one another to develop enough electrostatic capacitance. Namely, capacitors 4a and 4b, 4c and 4d, 4e and 4f, and 4g and 4h are connected respectively in series with each other; the negative terminals of the capacitors 4a, 4c, 4f and 4h are all together connected with the negative terminal of the DC link section; and the positive terminals of the capacitors 4b, 4d, 4e and 4g are all together connected with the positive terminal of the DC link section.

In the conventional example shown in Fig. 9, the semiconductor switching devices and the capacitors are so disposed on the PWB that the direction of the alignment of and the order of appearance in the alignment of, the positive and negative electrodes of the semiconductor switching devices are the same as the direction of the alignment of and the order of appearance in the alignment of, the positive and negative electrodes of the capacitors, on either of the PWM rectifier side and the inverter side. This layout of the semiconductor switching devices and the capacitors makes it easy to design the conductor patterning of the PWB and to assemble the PWB into the power converter. According to the new discovery of the inventor of this invention, however, this layout causes the uneven currents to flow into the capacitors when the semiconductor switching elements are switched on.

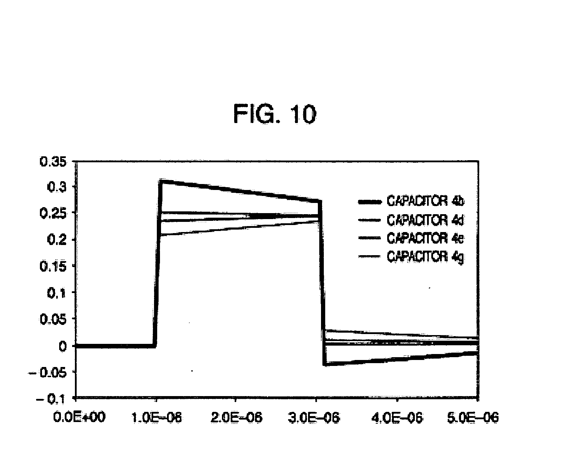

Fig. 10 shows the novel result of a simulation, carried out by the inventor, of such currents as distributed among the capacitors in the conventional example as shown in Fig. 9. Fig. 10 corresponds to a case where a step current having an amplitude of 1 pu (pulse unit) is caused to flow through the semiconductor switching device 2a on the side of the inverter when it is switched on. As shown in Fig. 9, at the rise time of the step current, the current flowing through the capacitor 4b in the vicinity of the semiconductor switching device 2a increases up to 0.3 pu in contrast with the average current of 0.25 pu. On the other hand, at the same rise time, the current flowing through the capacitor 2g remote from the semiconductor switching device 2a decreases down to 0.21 pu. This difference in current is caused as a result of the unevenness in impedances due to different wiring distances on the PWB 3. For example, as the number of the parallel connections of capacitors further increases and as the length of distribution of the capacitors along the vertical direction in Fig. 9 increases, the concentration of currents flowing through specific capacitors in the vicinity of particular semiconductor switching devices increases whereas the currents flowing through capacitors remote from the particular semiconductor switching devices further decreases. Accordingly, the unevenness in currents distributed among capacitors is further enhanced. Thus, in the case where current cannot be uniformly distributed but is concentrated through a specific capacitor, the burden onto the specific capacitor increases, possibly leading to the shortening of its useful life.

The object of this invention, which has been made to eliminate such a problem as described above, is to provide a power converter wherein capacitors constituting a smoothing capacitor system mounted on the wiring board such as a PWB are so arranged that when the semiconductor switching devices are switched on, the unevenness of currents distributed among the respective capacitors can be mitigated.

In order to attain the above mentioned object, according to this invention, plural capacitors are mounted on a conductive substrate disposed on plural semiconductor switching elements; the direction of the alignment of the positive and negative terminals of each semiconductor switching element is nearly the same as the direction of the alignment of the positive and negative terminals of the capacitors located in the vicinity of the semiconductor switching element; and the order of appearance in the alignment of the positive and negative electrodes of each semiconductor switching device is reversed with respect to the order of appearance in the alignment of the positive and negative electrodes of the capacitors in the vicinity of the semiconductor switching device.

According to this invention, the current path laid out on the wiring board, connecting the positive electrode of the capacitor (or capacitor group) located in the vicinity of any specific semiconductor switching device with the positive electrode of the specific semiconductor switching device intersects the current path laid out on the wiring board, connecting the negative electrode of the specific semiconductor switching device with the negative electrode of the capacitor (or capacitor group) located in the vicinity of the specific semiconductor switching device. Accordingly, the impedance between a specific semiconductor switching device and the capacitors located in the vicinity of the specific semiconductor switching device increases. As a result, the difference is mitigated between the impedance developed between the specific semiconductor switching device and the capacitors located in the vicinity of the specific semiconductor switching device and the impedance developed between the specific semiconductor switching device and the capacitors located remote from the specific semiconductor switching device. Thus, the unevenness in the currents distributed among the capacitors can be mitigated when the semiconductor switching devices are switched on.

Now, the embodiments of this invention will be described in reference to the attached drawings.
Fig. 1 schematically shows a power converter as a first embodiment of this invention;
Fig. 2 is a side view of the power converter as the first embodiment of this invention, taken in the direction as indicated by an arrow in Fig. 1;
Fig. 3 is the circuit diagram of the power converter as the first embodiment of this invention;
Fig. 4 shows the pattern of a PWB used for the first embodiment of this invention;
Fig. 5 graphically shows the result of a simulation of currents distributed among capacitors, carried out by the inventor with respect to the first embodiment of this invention;
Fig. 6 schematically shows a power converter as a second embodiment of this invention;
Fig. 7 schematically shows a power converter as a third embodiment of this invention;
Fig. 8 is the circuit diagram of the power converter as the third embodiment of this invention;
Fig. 9 schematically shows a conventional power converter wherein small-sized capacitors are mounted on a printed wiring board; and
Fig. 10 graphically shows the result of a simulation of currents distributed among capacitors with respect to the conventional power converter shown in Fig. 9.

### Embodiment 1

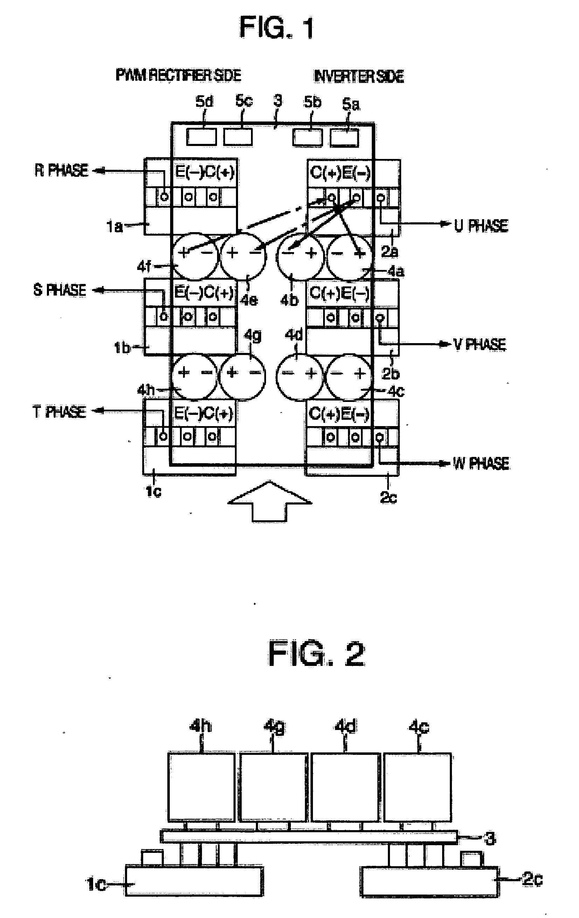

Fig. 1 schematically shows a power converter as a first embodiment of this invention. This power converter comprises semiconductor switching devices 1a ∼ 1c on the PWM rectifier side, semiconductor switching devices 2a ∼ 2c on the inverter side, a PWB (printed wiring board) 3, capacitors 4a ∼ 4h, and resistors 5a ∼ 5d. The PWB 3 forms a DC link section that connects the DC side of the PWM rectifier with the DC side of the inverter. A smoothing capacitor system consisting of the plural capacitors 4a - 4h is connected between the positive and negative electrodes of the DC link section. Two switching elements (e.g. transistors, IGBTs, etc.) connected in series with each other, are mounted on each of the semiconductor switching devices 1a ∼ 1c and 2a ∼ 2c. The collector of the first of the two series-connected switching elements serves as the positive terminal C(+) of the associated semiconductor switching device, and the emitter of the second of the two series-connected switching elements serves as the negative electrode E(- ) of the same semiconductor switching device. The point at which the first and second switching elements are connected in series with each other, that is, the point at which the emitter of the first switching element is connected with the collector of the second switching element, serves as the AC terminal of the associated semiconductor switching device. The AC terminal is connected with the external circuit.

Fig. 2 is a side view of the power converter as the first embodiment of this invention, taken in the direction as indicated by an arrow in Fig. 1. The PWB 3 is disposed over the semiconductor switching devices 1a ∼ 1c and 2a ∼ 2c on both the sides of the PWM rectifier and the inverter. The capacitors 4a ∼ 4h and the resistors 5a ∼ 5d are mounted on the PWB 3.

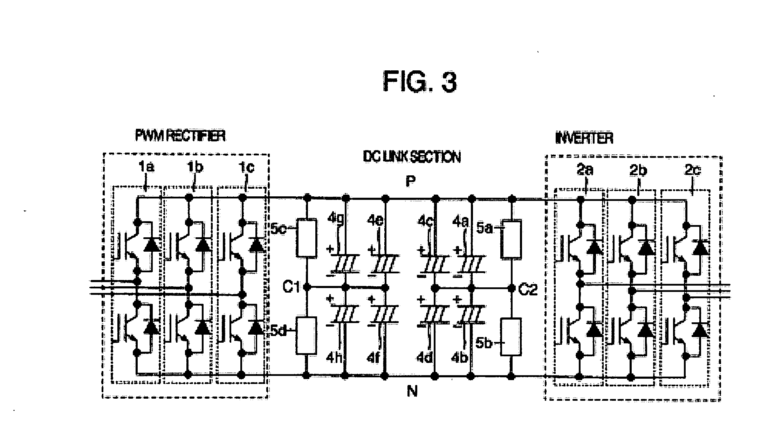

Fig. 3 is the circuit diagram of the power converter as the first embodiment of this invention. In this circuit diagram, the PWM rectifier converts the AC power from the commercial power source into DC power, and the inverter converts the DC power reversely into AC power having any desired frequency. The PWB 3 shown in Fig. 1 connects the positive terminal (+ terminal) and negative terminal (-terminal) of the PWM rectifier with the positive terminal (+ terminal) and negative terminal (- terminal) of the inverter, respectively. The capacitors and the resistors are connected between the positive and negative terminals. The capacitors mounted on the PWB 3 shown in Fig. 1 are configured in the two-series four-parallel connection so as to withstand sufficiently high voltages. The two-series four-parallel connection is such that the capacitors 4a and 4b are connected in series with each other, the capacitors 4c and 4d are connected in series with each other, the capacitors 4e and 4f are connected in series with each other, and the capacitors 4g and 4h are connected in series with each other, and that the positive terminals of the capacitors 4a, 4c, 4e and 4g are connected with the positive terminals of the PWM rectifier and the inverter while the negative terminals of the capacitors 4b, 4d, 4f and 4h are connected with the negative terminals of the PWM rectifier and the inverter. The resistors 5a - 5c are used to compensate for the balance of the voltages developed across each pair of the series-connected capacitors. As shown in Fig. 3, the resistors 5a and 5b are connected in series with each other, the resistors 5c and 5d are connected in series with each other, and the connection point between the resistors is connected with the connection point between the series-connected capacitors.

According to the first embodiment of this invention shown in Fig. 1, the semiconductor switching devices constituting the PWM rectifier are so arranged that the positive and negative terminals thereof are aligned in the same direction and also in the same order of appearance in the alignment. The semiconductor switching devices constituting the inverter are also arranged in the same manner. The direction of the alignment of the positive and negative terminals of the capacitors 4e ∼ 4h located in the vicinity of the semiconductor switching devices 1a ∼ 1c on the PWM rectifier side is nearly the same as the direction of the alignment of the positive and negative terminals of the semiconductor switching devices 1a ∼ 1c. However, the order of the positive and negative terminals appearing in the alignment is reversed. In like manner, the direction of the alignment of the positive and negative terminals of the capacitors 4a ∼ 4d located in the vicinity of the semiconductor switching devices 2a ∼ 2c on the inverter side is nearly the same as the direction of the alignment of the positive and negative terminals of the semiconductor switching devices 2a ∼ 2c, but the order of appearance of the positive and negative terminals in the alignment is reversed. With this arrangement, the current path on the PWB connecting the positive terminal of a specific semiconductor switching device (e.g. 2a) with the positive terminal of the series-connected capacitor pair (e.g. 4a and 4b) located in the vicinity of the specific semiconductor switching device, intersects the current path on the PWB connecting the negative terminal of the specific semiconductor switching device with the negative terminal of the same series-connected capacitor pair.

In this case, for example, when the semiconductor switching device 2a on the inverter side is switched on, the current path through which current flows between the positive terminal of the series-connected capacitor pair 4a-4b located in the vicinity of the semiconductor switching device 2a and the positive terminal of the semiconductor switching device 2a, intersects the current path through which current flows between the negative terminal of the semiconductor switching device 2a and the negative terminal of the same series-connected capacitor pair 4a-4b, as indicated by solid arrows shown in Fig. 1. Accordingly, the magnetic fluxes generated by those currents tend to enhance each other so that the resulting impedance is increased. On the other hand, regarding the series-connected capacitor pair 4e-4f remote from the semiconductor switching device 2a, the current flowing between the positive terminal of the capacitor pair 4e-4f and the positive terminal of the semiconductor switching device 2a is opposite in direction to the current flowing between the negative terminal of the semiconductor switching device 2a and the negative terminal of the capacitor pair 4e-4f, as indicated by broken arrows in Fig. 1. Accordingly, the generated magnetic fluxes tend to offset each other so that the resulting impedance is decreased. Namely, the difference between the impedance developed between the semiconductor switching device 2a and the capacitors located nearby and the impedance developed between the semiconductor switching device 2a and the capacitors remote from it, can be reduced. As a result, the unevenness in the currents distributed among the capacitors can be mitigated.

In the first embodiment shown in Fig. 1, the positive terminal C(+), the negative terminal E(- ) and the AC terminal of each semiconductor switching device are linearly aligned in this order. Further, the switching devices and the capacitors are symmetrically disposed on the PWB 3 with respect to the vertical direction of the PWB 3. With this layout, the AC terminals for the respective phases of the PWM rectifier and the inverter are disposed along the outer edges of the PWB 3, which facilitates the connection with an external circuit.

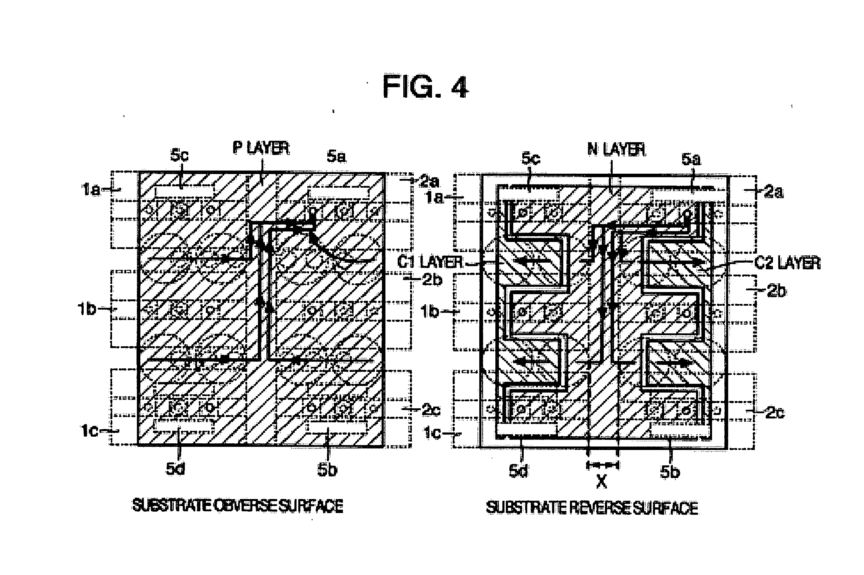

Fig. 4 shows the exemplary pattern of a PWB 3 used for the first embodiment of this invention. This PWB 3 is a double-sided conductor substrate having an obverse surface with a P-layer serving as the positive terminal side and a reverse surface with a C1 layer and a C2 layer serving as the intermediate connection areas and an N-layer serving as the negative terminal side. When the semiconductor switching device 2a on the inverter side is switched on, the direction of the current flowing along the obverse surface of the PWB is opposite to the direction of the current flowing along the reverse surface of the PWB, so long as the capacitor pairs remote from the semiconductor switching device 2a are concerned. On the other hand, with respect to the capacitor pair (e.g. 4a-4b) in the vicinity of the semiconductor switching device 2a, the current along the reverse surface detours the current along the obverse surface so as to avoid the current paths that enhance the induced magnetic fluxes. Consequently, the unevenness in the impedances distributed along current paths can be mitigated to reduce the unevenness in the currents flowing out of the capacitor pairs.

As shown in Fig. 1, the negative terminals of the capacitor pairs (4e-4f and 4g-4h) on the PWM rectifier side are arranged in opposition in the central area of the PWB 3 to the negative terminals of the capacitor pairs (4a-4b and 4c-4d) on the inverter side. Namely, those negative terminals are gathered in the central area of the PWB 3. This layout enables a single conductor substrate of comparatively simple structure having conductive layers on its obverse and reverse surfaces to constitute a resultant smoothing capacitor system by connecting a multitude of small-sized capacitors in the series-parallel configuration on both the PWM rectifier side and the inverter side.

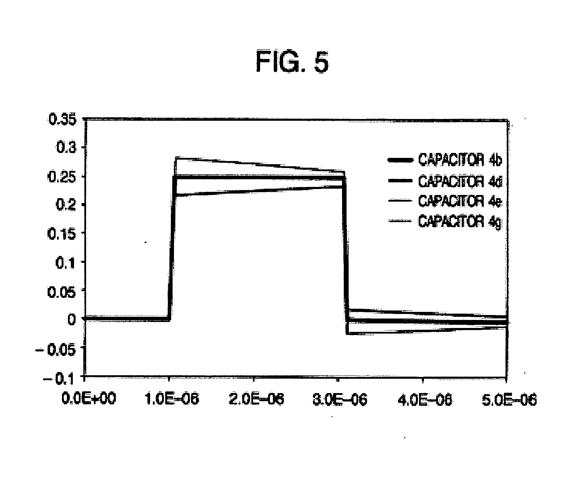

Fig. 5 graphically shows the result of a simulation of currents distributed among capacitors, carried out by the inventor with respect to the first embodiment of this invention. Fig. 5 corresponds to a case where when the semiconductor switching device 2a on the inverter side is switched on, a step current having an amplitude of 1 pu (pulse unit) is caused to flow. As shown in Fig. 5, at the rise time of the step current, the maximum current flows through the capacitor 4e, the maximum current reaching 0.28 pu relative to the average value of 0.25 pu. This value of 0.28 pu is smaller than the value of 0.31 pu which occurred in the conventional simulation result shown in Fig. 10. In addition to this, the minimum current approaches the average current. Hence, the unevenness in the currents can be mitigated.

With the substrate configuration shown in Fig. 4, the wider is the width X of that part of the current path in the N-layer (on the negative terminal side) in the reverse surface of the substrate which runs in the vertical direction in Fig. 4, the greater is the effect of current offsetting, and therefore of impedance reduction. In this case, the effect of mitigating current unevenness becomes greater with respect to the capacitors remote from the semiconductor switching device that is switched on. In the actual mounting of capacitors on the substrate, it is necessary to increase the distances between the capacitors 4a - 4d on the inverter side and the capacitors 4e - 4h on the PWM rectifier side, that is, for example, the distance between the capacitor 4b on the inverter side and the capacitor 4e on the PWM rectifier side is made greater than the distance between the capacitors 4a and 4b which are connected in series with each other.

Further, in the first embodiment shown in Fig. 1, the layer (C1) for intermediate connection on the PWM rectifier side is electrically isolated from the layer (C2) for intermediate connection on the inverter side, as seen in the circuit diagram and the substrate configuration shown in Figs. 3 and 4, respectively. Furthermore, resistors for voltage balancing are connected with the PWM rectifier and the inverter. Accordingly, the impedances between the capacitors and the resistors can be uniformized and therefore unwanted circulation currents can be prevented from flowing between the layers C1 and C2. Thus, a stable effect of current balancing can be obtained.

### Embodiment 2

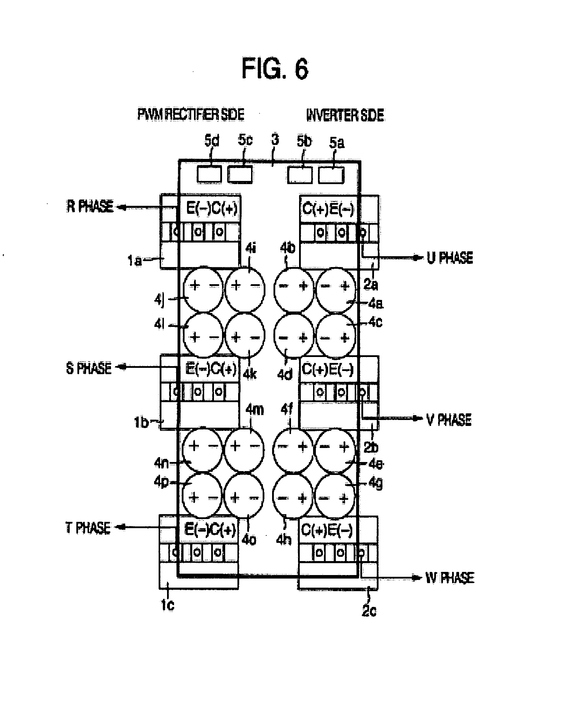

Fig. 6 schematically shows a power converter as a second embodiment of this invention. In this second embodiment, the number of parallel-connected capacitor pairs are greater than in the first embodiment described above. As shown in Fig. 6, the capacitors are in the two-series eight-parallel configuration. Namely, the pairs of capacitors 4a and 4b, 4c and 4d, 4e and 4f, 4g and 4h, 4i and 4j, 4k and 4l, 4m and 4n, and 4o and 4p are connected in series with each other, respectively; the positive terminals of the capacitors 4a, 4c, 4e, 4g, 4j, 4l, 4n and 4p are connected with the positive terminals of the PWM rectifier and the inverter; and the negative terminals of the capacitors 4b, 4d, 4f, 4h, 4i, 4k, 4m and 4o are connected with the negative terminals of the PWM rectifier and the inverter.

Also, in this embodiment which is similar to the first embodiment shown in Fig. 1, the semiconductor switching devices and the capacitors are so arranged that the direction of the alignment of the positive and negative terminals of the capacitors is nearly the same as the direction of the alignment of the positive and negative terminals of the semiconductor switching devices, on either of the PWM rectifier side and the inverter side, but that the order of the positive and negative terminals appearing in the alignment with respect to the capacitors is opposite to the order of the positive and negative terminals appearing in the alignment with respect to the semiconductor switching devices. As a result, the unevenness in the currents distributed among the capacitors can be reduced. This effect of reducing the current unevenness becomes more remarkable as the number of parallel-connected capacitor pairs increases and as the distances between the semiconductor switching devices and the capacitors remotest from the semiconductor switching devices increase. Thus, the burden on the capacitors can be evenly distributed so that the useful lives of the capacitors can be prolonged.

### Embodiment 3

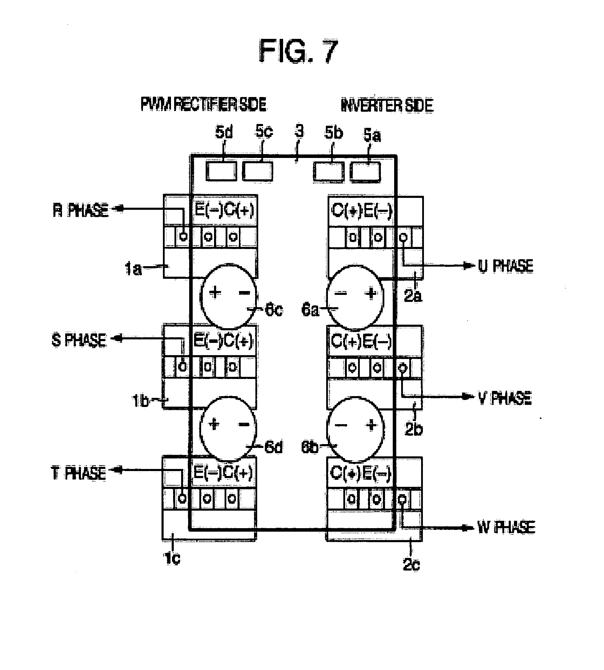

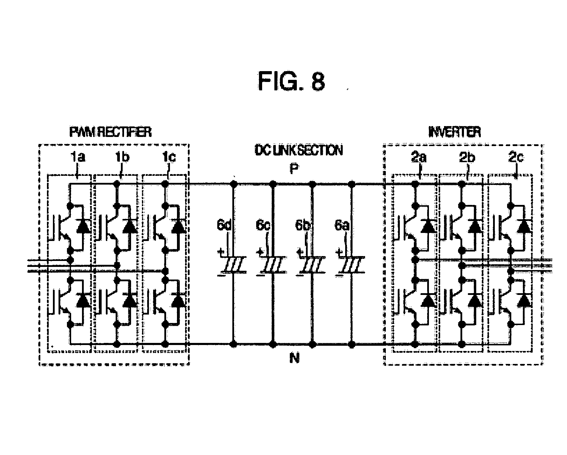

Fig. 7 schematically shows a power converter as a third embodiment of this invention and Fig. 8 is the circuit diagram of the power converter as the third embodiment of this invention. In this embodiment, capacitors 6a - 6d having high withstand voltages are used and they are individually connected between the positive electrode (P) and the negative electrode (N) of the DC link section. Namely, a smoothing capacitor system is constituted by four individual capacitors connected in parallel with one another, not by plural series-connected capacitor groups in parallel connection. Therefore, such resistors for voltage balancing as connected between series-connected capacitors are not provided. Also in this embodiment, the semiconductor switching devices and the capacitors are so arranged that the direction of the alignment of the positive and negative terminals of the capacitors is nearly the same as that of the positive and negative terminals of the semiconductor switching devices, on either of the PWM rectifier side and the inverter side, but that the order of the positive and negative terminals appearing in the alignment with respect to the capacitors is opposite to that of the positive and negative terminals appearing in the alignment with respect to the semiconductor switching devices, on either of the PWM rectifier side and the inverter side, as is similar to the first embodiment shown in Fig. 1. Thus, the unevenness in the currents distributed among the capacitors can be reduced.

In the first and second embodiments described above, the semiconductor switching devices and the associated capacitors on the PWM rectifier side are electrically connected with the semiconductor switching devices and the associated capacitors on the inverter side by means of a PWB. However, other types of conductive substrates may also be used for the same purpose. For example, a PWB on which plural capacitors are connected in parallel with one another may be connected between the positive terminals of the semiconductor switching devices of the PWM rectifier and the inverter and between the negative terminals of the semiconductor switching devices of the PWM rectifier and the inverter, the PWM rectifier and the inverter being mounted on separate conductive substrates. In such a case, high frequency ripple currents flow through the PWB and the main current components flow through the conductive substrates, so that heat generation in the PWB can be suppressed.

Although this invention have been described hitherto by way of embodiments, this invention will by no means limited to those embodiments, but other numerous modifications and alterations will be possible without going beyond the scope of the invention.

## Claims

1. An electric power converter comprising
plural semiconductor switching elements (1a ∼ 1c, 2a ∼ 2c); and
plural capacitors (4a ∼4h) mounted on a conductive substrate (3) disposed over the plural
semiconductor switching elements (1a ∼ 1c, 2a ∼ 2c), the plural capacitors (4a ∼4h) being connected between the positive and negative terminals of the plural semiconductor switching elements (1a ∼ 1c, 2a ∼ 2c),
wherein the direction of the alignment of the positive and negative terminals of the plural semiconductor switching elements (1a ∼ 1c, 2a ∼ 2c) is nearly the same as the direction of the alignment of the positive and negative terminals of those (4e ∼ 4h, 4a ∼ 4d) of the plural capacitors which are located in the vicinity of the plural semiconductor switching elements (1a ∼ 1c, 2a ∼ 2c), and the order of the positive and negative terminals appearing in the alignment of the plural semiconductor switching elements (1a ∼ 1 c, 2a ∼ 2c) are opposite to the order of the positive and negative terminals appearing in the alignment of those (4e ∼ 4h, 4a ∼ 4d) of the plural capacitors which are located in the vicinity of the plural semiconductor switching elements (1a ∼ 1c, 2a ∼ 2c).

2. An electric power converter as claimed in Claim 1, wherein the layout of the positive and negative terminals of the plural semiconductor switching elements (1a ∼ 1c, 2a ∼ 2c) and the plural capacitors (4a ∼4h) is in line symmetry with respect to the axis of symmetry virtually passing at the center of and along the lengthwise direction of, the conductive substrate (3).

3. An electric power converter as claimed in Claim 2, wherein
each of the plural capacitors (4a-4b, 4c-4d, 4e-4f, and 4g-4h) consists of two capacitors (4a and
4b, 4c and 4d, 4e and 4f; or 4g and 4h) connected in series with each other to form a series-connected capacitor pair (4a-4b, 4c-4d, 4e-4f, or 4g-4h);
the intermediate connection points of the series-connected capacitor pairs (4a-4b, 4c-4d) on one side of the line of symmetry are connected with one another, and the intermediate connection
points of the series-connected capacitor pairs (4e-4f, 4g-4h) on the other side of the line of symmetry are connected with one another;
the intermediate connection points of the series-connected capacitor pairs (4a-4b, 4c-4d) on the one side of the line of symmetry are electrically isolated from the intermediate connection points of the series-connected capacitor pairs (4e-4f, 4g-4h) on the other side of the line of symmetry;
resistors (5a, 5b) are connected between the positive terminals of the semiconductor switching elements (2a ∼2c) on the one side of the line of symmetry and the intermediate connection points of the series-connected capacitor pairs (4a-4b, 4c-4d) on the one side of the line of symmetry and between the negative terminals of the semiconductor switching elements (2a ∼ 2c) on the one side of the line of symmetry and the intermediate connection points of the series-connected capacitor pairs (4a-4b, 4c-4d) on the one side of the line of symmetry; and
resistors (5c; 5d) are connected between the positive terminals of the semiconductor switching elements (1a ∼ 1c) on the other side of the line of symmetry and the intermediate connection points of the series-connected capacitor pairs (4e-4f, 4g-4h) on the other side of the line of symmetry and
between the negative terminals of the semiconductor switching elements (1a ∼ 1c) on the other side of the line of symmetry and the intermediate connection points of the series-connected capacitor pairs (4e-4f, 4g-4h) on the other side of the line of symmetry.

4. An electric power converter as claimed in Claim 3, wherein the shortest distance between any one of the capacitor pairs (4a-4b, 4c-4d) on the one side of the line of symmetry and any one of the capacitor pairs (4e-4f, 4g-4h) on the other side of the line of symmetry is made greater than the longest distance between two capacitors pairs (4a-4b, 4c-4d) on the one side of the line of symmetry or between two capacitors pairs (4e-4f, 4g-4h) on the other side of the line of symmetry.

5. An electric power converter as claimed in Claims 3 or 4, wherein
the conductive substrate (3) has conductive layers (P, N, C1, C2) on its obverse and reverse
surfaces;
a first conductor pattern (C1) for connecting the intermediate connection points of the series-connected capacitor pairs (4a-4b, 4c-4d) on the one side of the line of symmetry with one another and a second conductor pattern (C2) for connecting the intermediate connection points of the series-connected capacitor pairs (4e-4f, 4g-4h) on the other side of the line of symmetry with one another, are formed on at least one of the obverse and reverse surfaces of the conductor substrate (3); and
the first and second conductor patterns (C1, C2) are located at the different edges of the conductive substrate (3), respectively.

6. An electric power converter as claimed in Claims 1 through 5, wherein the current paths on the conductive substrate (3) connecting the positive terminals of the semiconductor switching elements (1 a ∼ 1c, 2a ∼ 2c) and the positive terminals of the series-connected capacitor pairs (4e-4f, 4g-4h, 4a-4b, 4c-4d) located in the vicinity of the semiconductor switching elements (1a ∼ 1c, 2a ∼ 2c) intersect the current paths on the conductive substrate (3) connecting the negative terminals of the semiconductor switching elements (1a ∼ 1c, 2a ∼ 2c) and the negative terminals of the series-connected capacitor pairs (4e-4f, 4g-4h, 4a-4b, 4c-4d) located in the vicinity of the semiconductor switching elements (1a ∼ 1c, 2a ∼ 2c).

7. An electric power converter comprising
plural semiconductor switching elements (1a ∼ 1c, 2a ∼ 2c); and
plural capacitors (4a ∼4h) mounted on a conductive substrate (3) disposed over the plural
semiconductor switching elements (1a ∼ 1c, 2a ∼ 2c), the plural capacitors (4a ∼4h) being connected between the positive and negative terminals of the plural semiconductor switching elements (1a ∼ 1c, 2a ∼ 2c),
wherein the current paths on the conductive substrate (3) connecting the positive terminals of the semiconductor switching elements (1a ∼ 1c, 2a ∼ 2c) and the positive terminals of the series-connected capacitor pairs (4e-4f, 4g-4h, 4a-4b, 4c-4d) located in the vicinity of the semiconductor switching elements (1a ∼ 1c, 2a ∼ 2c) intersect the current paths on the conductive substrate (3) connecting the negative terminals of the semiconductor switching elements (1a ∼ 1c, 2a ∼ 2c) and the negative terminals of the series-connected capacitor pairs (4e-4f, 4g-4h, 4a-4b, 4c-4d) located in the vicinity of the semiconductor switching elements (1a ∼ 1c, 2a ∼ 2c).
